# EUROPÄISCHE PATENTSCHRIFT

(11) **EP 0 811 266 B1**
(45) Veröffentlichungstag und Bekanntmachung des Hinweises auf die Patenterteilung: **12.08.1998**
(21) Anmeldenummer: 96902888.5
(22) Anmeldetag: 16.02.1996
(51) Int. Cl.: H02H 3/247

(54) **UNTERSPANNUNGSAUSLÖSER MIT EINEM ELEKTROMAGNET**
UNDERVOLTAGE CIRCUIT BREAKER WITH AN ELECTROMAGNET
DECLENCHEUR A MINIMUM DE TENSION AVEC UN ELECTROAIMANT

(30) Priorität: 24.02.1995 DE 19507936
(43) Veröffentlichungstag der Anmeldung: 10.12.1997
(73) Patentinhaber: SIEMENS AKTIENGESELLSCHAFT, 80333 München (DE)
(72) Erfinder: BAUMGÄRTL, Ulrich, D-13599 Berlin (DE); RÖHL, Wolfgang, D-13503 Berlin (DE)
(86) Internationale Anmeldenummer: DE9600290
(87) Internationale Veröffentlichungsnummer: WO9626569

(56) Entgegenhaltungen:
- GB-A- 2 017 435
- US-A- 4 890 184

## Beschreibung

Die Erfindung betrifft einen Unterspannungsauslöser zur Überwachung der Spannung eines einphasigen oder mehrphasigen Netzes mit folgenden Merkmalen:
- ein Elektromagnet zur Auslösung eines Schaltgerätes,
- eine den Elektromagnet speisende Treiberschaltung,
   - die Treiberschaltung umfaßt eine Gleichrichterschaltung zur Gewinnung eines Gleichstromes, eine Kapazität und eine Schwellwertschaltung zur Unterbrechung eines den Elektromagnet im angezogenen Zustand haltenden Haltestromes, wenn die Spannung des Netzes eine vorbestimmte Größe unterschreitet,
   - die Treiberschaltung ist als Impulsgeber zur Erzeugung eines bei ausreichender Höhe der Netzspannung von dieser im wesentlichen unabhängigen Haltestromes ausgebildet,
   - die Treiberschaltung enthält einen durch ein Zeitglied gesteuerten Operationsverstärker und einen durch den Operationsverstärker gesteuerten elektronischen Schalter, der in Reihe mit dem Elektromagneten und in Reihe mit einem Widerstand geschaltet ist, wobei die an dem Widerstand abfallende Spannung das Zeitglied beaufschlagt,
- die Kapazität ist als Energiespeicher zur Speisung des Elektromagneten bei verzögerter Auslösung bemessen.

Ein Unterspannungsauslöser mit diesen Merkmalen ist durch die US 4 890 184 A bekanntgeworden.

Obwohl Unterspannungsauslöser in elektrischen Anlagen eingesetzt werden, um Schäden an Verbrauchern zu vermeiden, deren Betriebsspannung ein vorgegebenes Maß nicht unterschreiten darf, kann es dennoch erwünscht sein, daß nicht jede Spannungsabsenkung zur Stillsetzung des Verbrauchers führt. Insbesondere kann es erwünscht sein, daß kurzzeitige Unterschreitungen einer Mindestspannung oder kurzzeitige Unterbrechungen unberücksichtigt bleiben. Dies wird durch die erwähnte Verzögerung bei der Auslösung erreicht. Der beispielsweise in Niederspannungs-Leistungsschaltern kompakter Bauweise zum Einbau eines Unterspannungsauslösers vorgesehene Raum läßt es jedoch in der Regel nicht zu, neben dem Elektromagneten und den Bauelementen der Treiberschaltung Kondensatoren mit großer Kapazität unterzubringen. Ebenso ist es in der Regel nicht möglich, entsprechende Kondensatoren außerhalb des Schaltgerätes unterzubringen, weil der in Schaltanlagen oder Schaltschränken vorgesehene Einbauraum des Leistungsschalters lediglich für diesen bemessen ist. Daher ist die erzielbare Verzögerung auf relativ kleine Werte beschränkt.

Der Erfindung liegt die Aufgabe zugrunde, unter Verwendung einer möglichst kleinen Kapazität eine bestimmte geforderte Verzögerung der Auslösung bei Unterspannung zu erzielen.

Diese Aufgabe wird gemäß der Erfindung durch folgende weitere Merkmale gelöst:
- parallel zu dem in Reihe mit dem Elektromagneten geschalteten Widerstand ist eine Reihenschaltung aus einem weiteren elektronischen Schalter und einem Widerstand (R14) geschaltet,
- der Widerstand der genannten Reihenschaltung besitzt einen geringeren Widerstandswert als der in Reihe mit dem Elektromagneten liegende Widerstand und
- der weitere elektronische Schalter ist durch die Schwellwertschaltung steuerbar.

Auf diese Weise kann der durch den Elektromagnet fließende Strom auf einen minimal erforderlichen Haltestrom verringert werden, wenn die zu überwachende Spannung einen Grenzwert unterschreitet und nach Ablauf einer Verzögerungszeit eine Auslösung stattfinden soll. Durch die Verringerung des Haltestromes wird der Energieinhalt der Kapazität im Sinne einer längeren möglichen Verzögerungszeit besser ausgenutzt.

Wie vorstehend dargelegt, besteht eine wesentliche Eigenschaft des Unterspannungsauslösers nach der Erfindung darin, daß unter Verwendung einer vergleichweise kleinen Kapazität eine relativ lange Verzögerungszeit erzielbar ist. Daher können der Elektromagnet, die zugehörige Treiberschaltung und ein als Energiespeicher für die Verzögerungszeit vorgesehener Kondensator zu einer Geräteeinheit zusammengefaßt werden. Eine vorteilhafte Möglichkeit hierfür besteht darin, daß die Treiberschaltung einschließlich des Kondensators auf einer an die Breite des Elektromagneten angepaßten und in der Längsrichtung über diesen überstehenden Leiterplatte angeordnet ist, wobei die insgesamt benötigte Kapazität durch wenigstens einen Kondensator gebildet ist, der an dem über den Elektromagnet überstehenden Teil der Leiterplatte derart angebracht ist, daß im wesentlichen nur ein sich in der Längsrichtung des Elektromagneten erstreckender Raum beansprucht wird.

Die Erfindung wird im folgenden anhand des in den Figuren dargestellten Ausführungsbeispieles näher erläutert.

Die Figur 1 zeigt ein Prinzipschaltbild der Treiberschaltung eines Unterspannungsauslösers.

In der Figur 2 ist in vereinfachter perspektivischer Darstellung ein Unterspannungsauslöser mit einer Treiberschaltung gemäß der Figur 1 gezeigt.

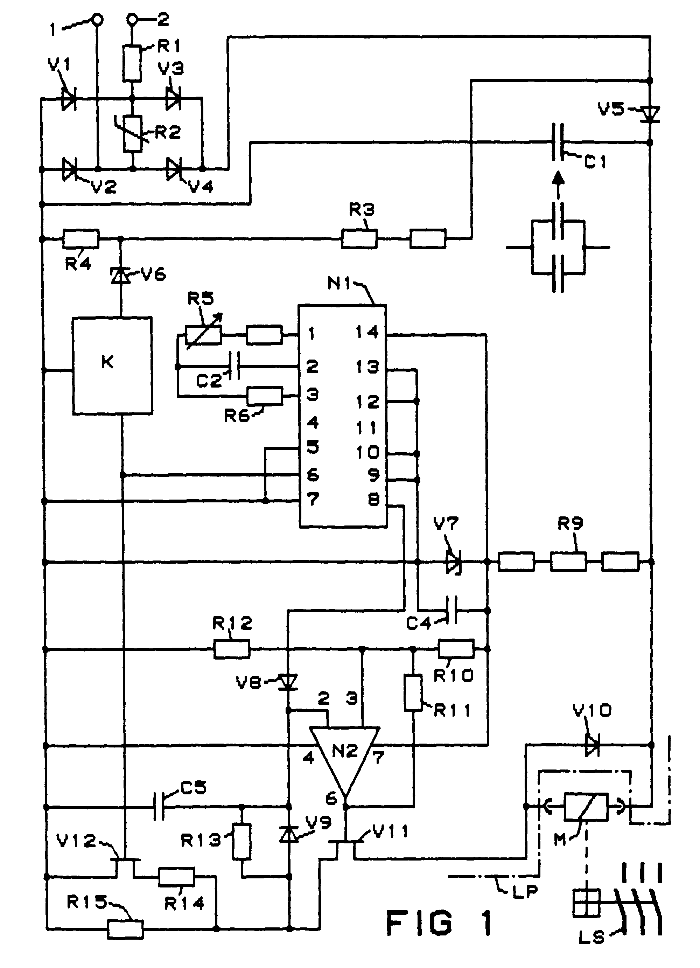

Die zu überwachende Spannung wird an die Klemmen 1 und 2 angelegt. Hieraus wird mittels einer Brückenschaltung aus den Gleichrichterdioden V1, V2, V3 und V4 eine Betriebsspannung für die Treiberschaltung gewonnen. Ein Widerstand R1 begrenzt den Einschaltstrom, während Überspannungen durch einen spannungsabhängigen Widerstand R2 begrenzt werden. Über eine weitere Diode V5 wird eine Kapazität C1 aufgeladen. Bei geeigneter Bemessung der Kapazität C1 werden die aus der Brückenschaltung gelieferten Halbwellen und darüber hinaus wird ein Energiespeicher zur Speisung eines im unteren rechten Teil der Figur 1 gezeigten Elektromagneten M gebildet. Der Elektromagnet M dient zur Auslösung eines schematisch angedeuteten Leistungsschalters LS.

In Reihe mit dem Elektromagnet M sind ein elektronischer Schalter V11 sowie ein Widerstand R15 geschaltet. Der elektronische Schalter V11 ist durch einen Operationsverstärker N2 steuerbar, dessen einer Eingang über R10, R12 eine Referenzspannung erhält, während der andere Eingang durch ein Zeitglied aus R13 und C5 beaufschlagt ist. An dem Zeitglied R13, C5 liegt die an dem Widerstand R15 abfallende Spannung. Aufgrund der periodischen Arbeitsweise der beschriebenen Schaltung wird der Magnet M von einem Strom mit variablem Tastverhältnis durchflossen. Der Mittelwert des Stromes bleibt daher bei schwankender Betriebsspannung im wesentlichen unverändert, solange die noch zu beschreibene Schwellwertschaltung nicht anspricht. Zur Bildung einer Schalthysterese wirkt der Widerstand R11 auf das Referenzpotential am Spannungsteiler R10, R12. Zur unverzögerten Aufladung des Zeitgliedes R13, C5 dient eine Diode V9.

Die am Eingang der Schaltung bereitgestellte Betriebsspannung wird über einen Spannungsteiler R3, R4 geteilt und mittels einer Z-Diode V6 einer Kippschaltung K zugeführt. Durch die Kippschaltung K wird sowohl ein weiterer elektronischer Schalter V12 als auch eine integrierte Schaltung N1 über deren Eingang 6 gesteuert. Beim Sperren des elektronischen Schalters V12 wird ein Widerstand R14 unwirksam, der parallel zu dem Widerstand R15 liegt und durch seinen verhältnismäßig geringen Widerstandswert den Betriebsstrom des Elektromagneten EM bestimmt. Die Anschlußpunkte 1, 2 und 3 der integrierten Schaltung N1 sind mit einer Kombination fester und einstellbarer Widerstände R5, R6 und einer Kapazität C2 beschaltet, wodurch am Ausgang 8 ein verzögertes Steuersignal zu erhalten ist. Bei der integrierten Schaltung N1 kann es sich beispielsweise und das im Handel unter Bezeichnung 4060 erhältliche Bauelement handeln.

Um eine von der Kapazität C1 möglichst unabhängige Betriebsweise der integrierten Schaltung N1 sowie des Operationsverstärkers N2 sicherzustellen, ist eine Widerstandskombination R9 in Verbindung mit einer Z-Diode V7 und einem Kondensator C4 vorgesehen. Eine weitere Diode V10 liegt parallel zu dem Elektromagneten M und ermöglicht ein Weiterfließen des Stromes bei der periodischen Abschaltung des elektronischen Schalters V11.

Die Vorgänge beim Auftreten einer Unterspannung werden nun anhand der Figur 1 erläutert. Im normalen Betrieb kann die Spannung an den Anschlußpunkten 1 und 2 beliebige Werte oberhalb eines Grenzwertes bis in den Bereich einer Überspannung aufweisen. Der Operationsverstärker N2 sorgt dann in Verbindung mit dem elektronischen Schalter V11 und den zugehörigen erwähnten Bauelementen durch eine angepaßte Änderung des Tastverhältnisses für die Aufrechterhaltung eines weitgehend gleichbleibenden Stromes durch den Elektromagneten M. Sinkt die Spannung an den Punkten 1 und 2 unter den erwähnten Grenzwert, so beaufschlagt die Kippschaltung K über den Anschlußpunkt 6 die integrierte Schaltung N1 sowie den weiteren elektronischen Schalter V12. Dieser wird unmittelbar gesperrt, wodurch der durch den Elektromagneten fließende Strom M auf einen niedrigen Haltestrom verringert wird. Zugleich beginnt die mittels des einstellbaren Widerstandes R5 eingestellte Verzögerungszeit zu laufen, bei deren Ablauf der Operationsverstärker N2 über den Ausgang 8 der integrierten Schaltung N1 und eine Diode V8 beaufschlagt und der elektronische Schalter Vli gesperrt wird. Der Elektromagnet M fällt nun ab und löst den Leistungsschalter LS aus.

Bei der Wiederkehr der Spannung an den Punkten 1 und 2 bzw. bei der Erhöhung dieser Spannung über den vorgesehenen Grenzwert wird der elektronische Schalter V12 wieder freigegeben, wodurch wieder der Widerstand R14 wirksam wird. Daher kann wieder der höhere, zum Anziehen des Elektromagneten M benötigte Strom fließen, sobald der Operationsverstärker N2 gleichfalls seinen Betrieb aufnimmt und den elektronischen Schalter V11 freigibt.

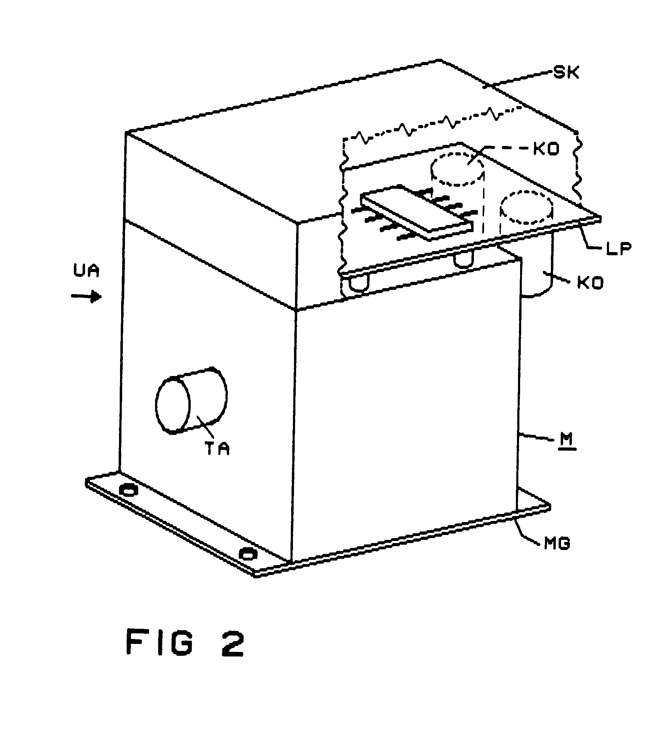

In der Figur 2 ist ein Beispiel für den mechanischen Aufbau eines Unterspannungsauslösers UA gezeigt, der zum Einbau in einen Niederspannungs-Leistungsschalter vorgesehen ist. Der bereits bei der Beschreibung der Figur 1 erwähnte Elektromagnet M ist als Tauchankermagnet ausgebildet und besitzt einen Tauchanker TA, der in geeigneter Weise mit einer Auslösewelle im Schaltschloß des Leistungsschalters zu verbinden ist. Bestandteil des Elektromagneten M ist ein Federspeicher, de jedoch in der Figur 2 nicht sichtbar ist. Zur Befestigung des Unterspannungsauslösers UA in dem Leistungsschalter dient eine mit dem Elektromagneten M verbundene Grundplatte MG.

Auf der Oberseite des Elektromagneten M ist eine Leiterplatte LP angebracht, deren Begrenzung in der Figur 1 im Bereeich des Elektromagneten M strichpuntkiert angedeutet ist. Auf der Leiterplatte LP befinden sich alle Elemente der zuvor beschriebenen Schaltungsanordnung. Die Kapazität C1 ist auf zwei Kondensatoren KO verteilt, wie dies auch in der Figur 1 als Schaltungsvariante angedeutet ist.

Die Leiterplatte LP ist gemäß der Figur 2 so bemessen, daß sie etwa der Breite des Elektromagneten M entspricht, jedoch länger als dieser ausgebildet ist. Daher weist die Leiterplatte LP in der Längsrichtung des Elektromagneten, die der Längsachse des Tauchankers TA entspricht, einen Überstand auf. Auf diesem überstehenden Teil der Leiterplatte LP sind die beiden Kondensatoren KO nach unten hängend angebracht.

Daher ist der Raumbedarf besonders gering, weil im wesentlichen nur ein in der Längsrichtung des Elektromagneten M sich erstreckender Raum benötigt wird. In der Höhe wird nur wenig Raum beansprucht, weil die übrigen Bauelemente überwiegend flach auf der Leiterplatte LP aufliegend montierbar sind. Eine Schutzkappe SK deckt die Leiterplatte LP ab und schützt diese vor äußeren Einflüssen.

## Patentansprüche

1. Unterspannungsauslöser zur Überwachung der Spannung eines einphasigen oder mehrphasigen Netzes (1, 2) mit folgenden Merkmalen:
- ein Elektromagnet (M) zur Auslösung eines Schaltgerätes (LS),
- eine den Elektromagnet (M) speisende Treiberschaltung,
- die Treiberschaltung umfaßt eine Gleichrichterschaltung (Vl, V2, V3, V4) zur Gewinnung eines Gleichstromes, eine Kapazität (C1) und eine Schwellwertschaltung (V6, K) zur Unterbrechung eines den Elektromagnet (M) im angezogenen Zustand haltenden Haltestromes, wenn die Spannung des Netzes eine vorbestimmte Größe unterschreitet,
- die Treiberschaltung ist als Impulsgeber (N2, V11) zur Erzeugung eines bei ausreichender Höhe der Netzspannung (1, 2) von dieser im wesentlichen unabhängigen Haltestromes ausgebildet,
- die Treiberschaltung enthält einen durch ein Zeitglied (R13, C5) gesteuerten Operationsverstärker (N2) und einen durch den Operationsverstärker (N2) gesteuerten elektronischen Schalter (V11), der in Reihe mit dem Elektromagneten (M) und in Reihe mit einem Widerstand (R15) geschaltet ist, wobei die an dem Widerstand (R15) abfallende Spannung das Zeitglied beaufschlagt,
- die Kapazität (C1) ist als Energiespeicher zur Speisung des Elektromagneten (M) bei verzögerter Auslösung bemessen,
**gekennzeichnetdurch** folgende weitere Merkmale:
- parallel zu dem in Reihe mit dem Elektromagneten (M) geschalteten Widerstand (R15) ist eine Reihenschaltung aus einem weiteren elektronischen Schalter (V12) und einem Widerstand (R14) geschaltet,
- der Widerstand (R14) der genannten Reihenschaltung besitzt einen geringeren Widerstandswert als der in Reihe mit dem Elektromagneten (M) liegende Widerstand (R15) besitzt und
- der weitere elektronische Schalter (V12) ist durch die Schwellwertschaltung (V6, K) steuerbar.

2. Unterspannungsauslöser nach Anspruch 1,
**dadurch gekennzeichnet**, daß die Treiberschaltung einschließlich der Kapazität (C1) auf einer an die Breite des Elektromagneten (M) angepaßten und in der Längsrichtung über diesen überstehenden Leiterplatte (LP) aneordnet ist, wobei die Kapazität (C1) durch wenigstens einen Kondensator (KO) gebildet ist, der an dem über den Elektromagnet (M) überstehenden Teil der Leiterplatte (LP) derart angebracht ist, daß im wesentlichen nur ein sich in der Längsrichtung des Elektromagneten (M) erstreckender Raum beansprucht wird.

## Claims

1. Undervoltage release for monitoring the voltage of a single-phase or polyphase mains (1, 2), having the following features:
- an electromagnet (M) for releasing a switching device (LS), a driver circuit which feeds the electromagnet (M),
- the driver circuit comprises a rectifier circuit (V1, V2, V3, V4) for obtaining a DC current, a capacitor (C1) and a threshold value circuit (V6, K) for interrupting a holding current, which holds the electromagnet (M) in the pulled-in state, when the voltage of the mains falls below a predetermined magnitude,
- the driver circuit is constructed as a pulse generator (N2, V11) for generating a holding current which is essentially independent of the mains voltage (1, 2) when the latter is at a sufficient level,
- the driver circuit contains an operational amplifier (N2) which is controlled by a timing element (R13, C5) and an electronic switch (V11) which is controlled by the operational amplifier (N2) and is connected in series with the electromagnet (M) and in series with a resistor (R15), the voltage drop across the resistor (R15) being applied to the timing element,
- the capacitor (C1) is dimensioned as an energy store for feeding the electromagnet (M) in the event of delayed release,
characterized by the following further features:
- a series circuit formed by a further electronic switch (V12) and a resistor (R14) is connected in parallel with the resistor (R15) which is connected in series with the electromagnet (M),
- the resistor (R14) of the said series circuit has a smaller resistance value than the resistor (R15) connected in series with the electromagnet (M), and
- it is possible to control the further electronic switch (V12) by means of the threshold value circuit (V6, K).

2. Undervoltage release according to Claim 1, characterized in that the driver circuit, including the capacitor (C1), is arranged on a printed circuit board (LP) which is matched to the width of the electromagnet (M) and projects beyond the latter in the longitudinal direction, the capacitor (C1) being formed by at least one capacitor (KO) which is fitted to that part of the printed circuit board (LP) which projects beyond the electromagnet (M), such that essentially only a space extending in the longitudinal direction of the electromagnet (M) is taken up.

## Revendications

1. Déclencheur à minimum de tension pour contrôler la tension d'un réseau (1,2) monophasé ou polyphasé, présentant les caractéristiques suivantes :
- un électro-aimant (M) pour déclencher un appareil de distribution (LS),
- un circuit d'attaque alimentant l'électro-aimant (M),
- le circuit d'attaque comprend un circuit redresseur (V1, V2, V3, V4) pour obtenir un courant continu, une capacité (C1) et un circuit à seuil (V6, K) pour interrompre un courant de maintien maintenant l'électro-aimant (M) dans l'état attiré, lorsque la tension du réseau est inférieure à une valeur prédéterminée,
- le circuit d'attaque est réalisé sous forme de générateur (N2, V11) d'impulsions pour produire un courant de maintien sensiblement indépendant de la tension du réseau (1, 2) lorsque celle-ci est suffisamment élevée,
- le circuit d'attaque contient un amplificateur opérationnel (N2) commandé par un système de temporisation (R13, C5) et un interrupteur électronique (V11) qui est commandé par l'amplificateur opérationnel (N2) et est monté en série avec l'électro-aimant (M) et en série avec une résistance (R15), la chute de tension aux bornes de la résistance (R15) alimentant le système de temporisation,
- la capacité (C1) est dimensionnée sous forme d'interrupteur d'énergie pour alimenter l'électro-aimant (M) avec un déclenchement retardé,
caractérisé par les caractéristiques suivantes :
- un circuit en série formé d'un autre interrupteur électronique (V12) et d'une résistance (R14) est monté en parallèle avec la résistance (R15) montée en série avec l'électro-aimant (M),
- la résistance (R14) du circuit en série mentionné possède une valeur plus petite que la résistance (R15) montée en série avec l'électro-aimant (M), et
- l'autre interrupteur électronique (V12) peut être commandé par le circuit à seuil (V6. K).

2. Déclencheur à minimum de tension selon la revendication 1, caractérisé en ce que le circuit d'attaque est, y compris la capacité (C1), disposé sur une carte imprimée (LP) adaptée à la largeur de l'électro-aimant (M) et dépassant dans la direction longitudinale, la capacité (C1) étant formée par au moins un condensateur (KO) qui est monté sur la partie de la carte imprimée (LP) dépassant de l'électro-aimant (M) de manière à occuper pour l'essentiel uniquement un espace s'étendant dans la direction longitudinale de l'électro-aimant (M).
